# EUROPEAN PATENT APPLICATION

(11) **EP 4 840 622 A1**
(43) Date of publication of application: **18.11.2026**
(21) Application number: 25922952.4
(22) Date of filing: 10.12.2025
(51) Int. Cl.: B30B 3/00, B30B 15/34, B21B 37/74, H01M 4/04

(54) **ROLLING ROLL HAVING TWO OR MORE FLOW PATHS FORMED THEREIN**

(30) Priority: 03.02.2025 KR 20250013068
(71) Applicant: LG Energy Solution, Ltd., Seoul 07335 (KR)
(72) Inventor: LEE, Taeho, Daejeon 34122 (KR); KIM, Hwan Han, Daejeon 34122 (KR); CHOI, Nak Won, Daejeon 34122 (KR); KIM, Taehyung, Daejeon 34122 (KR); KWON, So Jung, Daejeon 34122 (KR); KIM, Yeonsu, Daejeon 34122 (KR)
(74) Representative: Plasseraud IP
(86) International application number: PCT/KR2025/021277
(87) International publication number: WO 2026/164366

(57) **Abstract**

According to an embodiment of the present disclosure, provided is a rolling roll comprising:
a roll body;
a shaft section for supporting the roll body; and
a flow path section that is formed inside the roll body and the shaft section, and comprises:
a center flow path section that includes a first center flow path formed so that a cooling oil flows in a form penetrating through the center in a longitudinal direction of the roll body and the shaft section, a 2-1 center flow path formed so that the cooling oil flows separately from the first center flow path, and a 2-2 center flow path formed so that the cooling oil flows separately from the first center flow path and the 2-1 center flow path, and
a full-width flow path section that includes a first full-width flow path formed in the vicinity of the outer peripheral surface of the roll body so that the cooling oil flows in the central part with respect to the longitudinal direction of the roll body, a 2-1 full-width flow path formed in the vicinity of the outer peripheral surface of the roll body so that the cooling oil flows on one side of the first full-width flow path with respect to the longitudinal direction of the roll body, and a 2-2 full-width flow path formed so that the cooling oil flows on the other side of the first full-width flow path.

## Description

### TECHNICAL FIELD

### Cross-Reference to Related Application(s)

This application claims priority to and the benefit of Korean Patent Application No. 10-2025-0013068, filed on February 3, 2025, the entire contents of which are incorporated herein by reference.

The present disclosure relates to a rolling roll formed with two or more flow paths, and more particularly, to a rolling roll comprising two or more full-width flow path sections having: a first full-width flow path formed in the central part and second full-width flow paths formed on both sides thereof.

### BACKGROUND ART

In modern society, as portable devices such as a mobile phone, a notebook computer, a camcorder and a digital camera as well as energy storage systems (ESS) have been daily used, the development of technologies in the fields related thereto has been activated. In addition, chargeable/dischargeable secondary batteries are used as a power source for an electric vehicle (EV), a hybrid electri c vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, being freely charged and discharged, and having very low self-discharge rate and high energy density.

Such a lithium secondary battery mainly uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed between them, and an exterior material, i.e., a battery case, which seals and houses the electrode assembly together with an electrolyte.

Such secondary batteries have been widely used in medium and large devices such as electric vehicles and energy storage systems (ESSs), as well as in small devices such as portable electronic devices, and the extent of their use is rapidly increasing. Furthermore, in recent years, there has been a growing trend in the use of battery packs for power storage purposes, not only for vehicles but also for residential applications.

The manufacturing process of such a lithium secondary battery is roughly classified into three steps: an electrode process, an assembly process, and a formation process. The electrode process may be again divided into an active material mixing process, an electrode coating process, a rolling process, a slitting process, a winding process, and the like. Among them, the rolling process is a process of passing an electrode substrate between a pair of rolling rolls heated to high temperature and compressing it to a desired thickness, in order to reduce the thickness of the electrode substrate having finished the coating process to thereby increase capacity density, and to increase the adhesion between the electrode current collector and the electrode active material.

In this case, the rolling roll used in the rolling process basically has only one flow path formed inside.

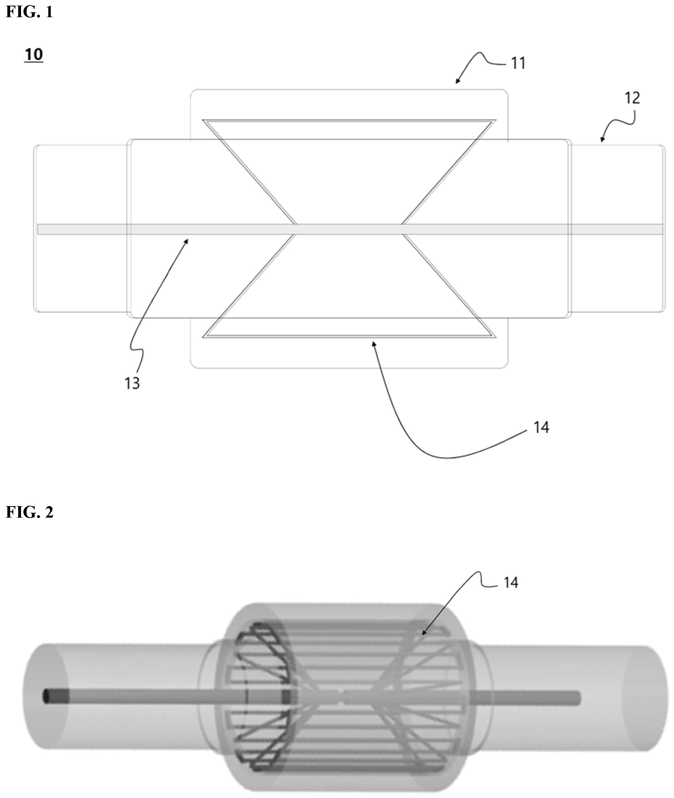

Specifically, a cross-sectional schematic diagram of a conventional rolling roll is shown in FIG. 1, and a perspective view is shown in FIG. 2.

Referring to FIGS. 1 and 2, the rolling roll 10 comprises a roll body 11, a shaft section 12 for supporting the roll body 11, and a full-width flow path section comprising: a center flow path 13 formed inside the roll body 11 and the shaft section 12 and formed in a form penetrating through the center of the roll body 11 in the longitudinal direction of the roll body 11 and the shaft section 12 so that a cooling oil flows, and a full-width flow path 14 formed so that the cooling oil flows in the vicinity of the outer peripheral surface of the roll body 11.

Here, the cooling oil has a path that flows from the cooling oil supply section (not shown) through the center flow path 13, flows from the center flow path 13 to a full-width flow path 14 via a branch flow path, and then returns to the center flow path 13 and is discharged by the cooling oil discharge section (not shown).

Although not shown in the drawing, the center flow path 13 is structured to include a supply flow path connected to the cooling oil supply section and a discharge flow path connected to the cooling oil discharge section, wherein the supply flow path and the discharge flow path are divided and not mixed.

Additionally, the full-width flow path 14 has a zigzag pattern in the vicinity of the outer peripheral surface of the roll body 11, and is formed in five or more at intervals.

However, since the conventional rolling roll 10 with such a structure includes only one flow path, the crown shape for each rolling stand is fixed, whereby when rolling electrode models under different conditions on the same rolling stand, the side thickness is adjusted only by back pressure.

However, there is a problem that the optimal crown differs depending on the electrode model, whereby the thickness deviation between the center and side of the electrode occurs differently.

Further, when continuously producing the same electrode model on the same rolling stand, there is also the problem that the depression in side thickness occur as the continuous operation time increases even at the maximum back pressure.

Therefore, there is a need to develop a rolling technology that can improve electrode quality by rolling with an optimal crown for each electrode model and preventing depression of the side from occurring even when continuously producing the same electrode model.

### DETAILED DESCRIPTION OF THE INVENTION

### Technical Problem

It is an object of the present disclosure to improve side thickness process capability by providing an optimal crown for each model.

It is another object of the present disclosure to provide a rolling roll that can secure maximum back pressure margin even when continuously producing the same model.

However, the technical objects to be solved by embodiments of the present disclosure are not limited to the above-described objects, and can be variously expanded within the scope of the technical idea included in the present disclosure.

### Technical Solution

According to an aspect of the present disclosure, provided is a rolling roll comprising:
a roll body;
a shaft section for supporting the roll body; and
a flow path section that is formed inside the roll body and the shaft section, and comprises:
   a center flow path section that includes a first center flow path formed in a form penetrating through the center in a longitudinal direction of the roll body and the shaft section so that a cooling oil flows, a 2-1 center flow path formed so that the cooling oil flows separately from the first center flow path so that a cooling oil flows, and a 2-2 center flow path formed so that the cooling oil flows separately from the first center flow path and the 2-1 center flow path so that a cooling oil flows, and
   a full-width flow path section that includes a first full-width flow path formed in the vicinity of an outer peripheral surface of the roll body so that the cooling oil flows in a central part with respect to a longitudinal direction of the roll body, a 2-1 full-width flow path formed in the vicinity of the outer peripheral surface of the roll body so that the cooling oil flows on one side of the first full-width flow path with respect to the longitudinal direction of the roll body, and a 2-2 full-width flow path formed so that the cooling oil flows on the other side of the first full-width flow path.

Here, the first center flow path and the first full-width flow path may be formed in parallel, and the 2-1 center flow path and the 2-1 full-width flow path may be formed in parallel, and the 2-2 center flow path and the 2-2 full-width flow path may be formed in parallel.

Also, the rolling roll may further comprise a first branch flow path formed to connect the first center flow path and the first full-width flow path, a 2-1 branch flow path formed to connect the 2-1 center flow path and the 2-1 full-width flow path, and a 2-2 branch flow path formed to connect the 2-2 center flow path and the 2-2 full-width flow path.

In one specific embodiment, the first center flow path may comprise a first supply center flow path flowing in a first direction which is a direction of supplying the cooling oil, and a first discharge center flow path flowing in a second direction which is an opposite direction to the first direction and is a direction of discharging the cooling oil, and
the first branch flow path may comprise a first supply branch flow path formed so that the cooling oil flows from the first supply center flow path to the first full-width flow path, and a first discharge branch flow path formed so that the cooling oil flows from the first full-width flow path to the first discharge center flow path.

Additionally, the 2-1 center flow path may comprise a 2-1 supply center flow path flowing in a first direction which is a direction of supplying the cooling oil, and a 2-1 discharge center flow path flowing in a second direction which is an opposite direction to the first direction and is a direction of discharging the cooling oil, with the 2-1 branch flow path comprising a 2-1 supply branch flow path formed so that the cooling oil flows from the 2-1 supply center flow path to the 2-1 full-width flow path, and a 2-1 discharge branch flow path formed so that the cooling oil flows from the 2-1 full-width flow path to the 2-1 discharge center flow path,
the 2-2 center flow path may comprise a 2-2 supply center flow path flowing in a first direction which is a direction of supplying the cooling oil, and a 2-2 discharge center flow path flowing in a second direction which is an opposite direction to the first direction and is a direction of discharging the cooling oil, and
the 2-2 branch flow path comprises a 2-2 supply branch flow path formed so that the cooling oil flows from the 2-2 supply center flow path to the 2-2 full-width flow path, and a 2-2 discharge branch flow path formed so that the cooling oil flows from the 2-2 full-width flow path to the 2-2 discharge center flow path.

In one specific embodiment, the first full-width flow path may comprise a 1-1 full-width flow path flowing in a first direction, a 1-2 full-width flow path flowing in a second direction which is an opposite direction to the first direction, and a first connection flow path that connects the 1-1 full-width flow path and the 1-2 full-width flow path, and
the 2-1 full-width flow path may comprise a 2-1-1 full-width flow path flowing in the first direction, a 2-1-2 full-width flow path flowing in a second direction which is an opposite direction to the first direction, and a 2-1 connection flow path that connects the 2-1-1 full-width flow path and the 2-1-2 full-width flow path, and
the 2-2 full-width flow path may comprise a 2-2-1 full-width flow path flowing in the first direction, a 2-2-2 full-width flow path flowing in the second direction which is an opposite direction to the first direction, and a 2-2 connection flow path that connects the 2-2-1 full-width flow path and the 2-2-2 full-width flow path.

On the other hand, the first full-width flow path may have a length of 40 to 60% of the roll body length, and the 2-1 full-width flow path and the 2-2 full-width flow path may have a length of 15 to 25% of the roll body length, respectively.

Additionally, the first full-width flow path, the 2-1 full-width flow path, and the 2-2 full-width flow path may be arranged at the same position with respect to a circumferential direction of the roll body.

The first full-width flow path, the 2-1 full-width flow path, and the 2-2 full-width flow path may be respectively arranged in two or more at equal intervals.

The cooling oil may flow simultaneously through the first full-width flow path, the 2-1 full-width flow path, and the 2-2 full-width flow path, and the cooling oil flowing through the first full-width flow path and the cooling oil flowing through the 2-1 full-width flow path and the 2-2 full-width flow path may be adjusted to have the same or different temperatures.

The cooling oil may have a temperature in the range of 25°C to 100°C.

When the temperatures of the cooling oil flowing through the first full-width flow path and the cooling oil flowing through the 2-1 full-width flow path and the 2-2 full-width flow path are different from each other, the temperature difference may be 30°C to 70°C.

### BRIEF DESCRIPTION OF THE DRAWINGS

FIG. 1 is a schematic cross-sectional view of a conventional rolling roll.
FIG. 2 is a perspective view of a conventional rolling roll.
FIG. 3 is a schematic cross-sectional view of a rolling roll according to one embodiment of the present disclosure.
FIG. 4 is an enlarged schematic view of the center flow path section in the rolling roll of FIG. 3.
FIG. 5 is a schematic cross-sectional view of the center flow path section in the rolling roll of FIG. 3.
FIG. 6 is a perspective view showing the configuration of the first full-width flow path and the first branch flow path in the rolling roll of FIG. 3.

### DETAILED DESCRIPTION OF THE EMBODIMENTS

Hereinafter, various embodiments of the present disclosure will be described in detail with reference to the accompanying drawings so that inventive concept may be readily implemented by those skilled in the art. The present disclosure may be realized in various different ways, and is not limited to the embodiments set forth herein.

Portions that are irrelevant to the description will be omitted to clearly describe the present disclosure, and like reference numerals designate like elements throughout the specification.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and a region are shown to be exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the specification, when a portion is referred to as "including" or " comprising" a certain component, it means that the portion can further include other compone nts, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

Now, embodiments of the present disclosure will be described with reference to the accompanying drawings.

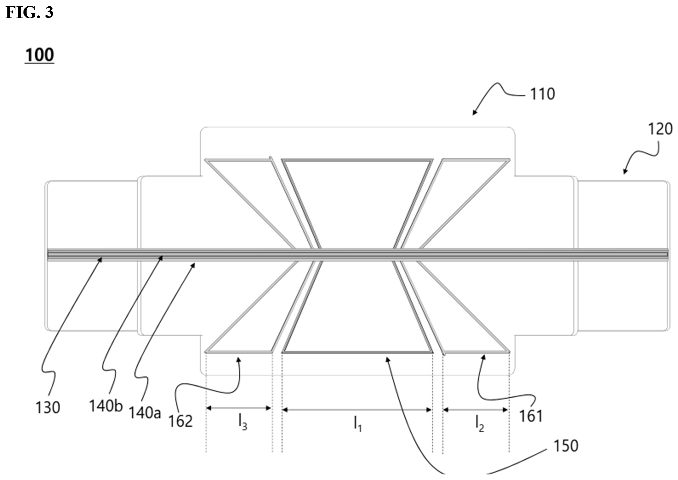

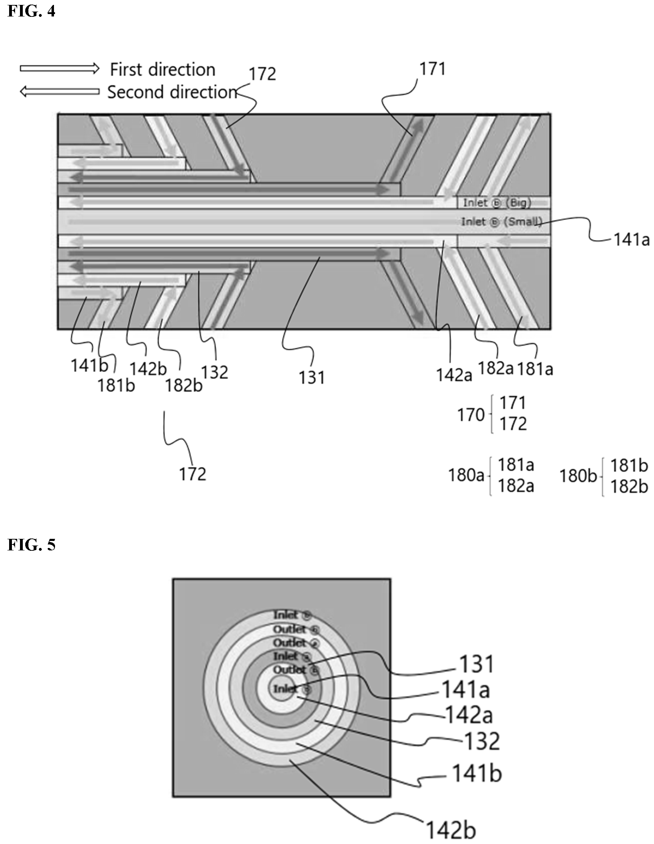

FIG. 3 shows a schematic cross-sectional view of a rolling roll according to one embodiment of the present disclosure. FIG. 4 shows an enlarged schematic view of the vicinity of the center flow path section in the rolling roll. FIG. 5 shows a schematic cross-sectional view of the center flow path section.

First, referring to FIG. 3, the rolling roll 100 according to one embodiment of the present disclosure is structured to include a roll body 110; a shaft section 120 for supporting the roll body 110; and a flow path section formed inside the roll body 110 and the shaft section 120.

Here, the flow path section comprises: a center flow path section that includes a first center flow path 130 formed in a form penetrating through the center in a longitudinal direction of the roll body 110 and the shaft section 120 so that a cooling oil flows, a 2-1 center flow path 140a formed separately from the first center flow path 130 so that a cooling oil flows, and a 2-2 center flow path 140b formed so that the cooling oil flows separately from the first center flow path and the 2-1 center flow path 140a so that a cooling oil flows, and a full-width flow path section that includes a first full-width flow path 150 formed so that the cooling oil flows in a central part with respect to a longitudinal direction of the roll body 110, a 2-1 full-width flow path 161 formed in the vicinity of the outer peripheral surface of the roll body 110 so that the cooling oil flows on one side of the first full-width flow path 150 with respect to the longitudinal direction of the roll body 110, and a 2-2 full-width flow path 162 formed so that the cooling oil flows on the other side of the first full-width flow path 150.

Also, referring to FIGS. 3 and 4 together, a first center flow path 130 and the first full-width flow path 150 are formed in parallel, wherein the first center flow path 130 is connected to the first full-width flow path 150 by the first branch flow path 170, the 2-1 center flow path 140a is formed in parallel to the 2-1 full-width flow path 161, and the 2-2 center flow path 140b is formed in parallel to the 2-2 full-width flow path 162. In this case, the 2-1 center flow path 140a is connected to the 2-1 full-width flow path 161 by the 2-1 branch flow path 180a, and the 2-2 center flow path 140b is connected to the 2-2 full-width flow path 162 by the 2-2 branch flow path 180b.

The respective flow paths will be described in more detail below.

First, referring to FIGS. 3 to 5, the first center flow path 130 comprises a first supply center flow path 131 flowing in a first direction which is a direction of supplying the cooling oil, and a first discharge center flow path 132 flowing in a second direction which is an opposite direction to the first direction and is a direction of discharging the cooling oil.

Further, the first supply center flow path 131 and the first discharge center flow path 132 are connected to the first full-width flow path 150 by the first branch flow path 170. Specifically, the cooling oil flowing into the first supply center flow path 131 flows to the first full-width flow path 150 through the first supply branch flow path 171, and the cooling oil circulating through the first full-width flow path 150 is discharged from the rolling roll 100 through the first discharge center flow path 132 from the first discharge branch flow path 172.

In this case, the first supply branch flow path 171 and the first discharge branch flow path 172 may be formed in such a form that their widths become wider from the first supply center flow 131 side toward the first full-width flow path 150 side.

Similarly, the 2-1 center flow path 140a comprises a 2-1 supply center flow path 141a flowing in a first direction, which is a direction of supplying the cooling oil, and a 2-1 discharge center flow path 142a flowing in a second direction, which is an opposite direction to the first direction and is a direction of discharging the cooling oil.

More similarly, the 2-2 center flow path 140b comprises a 2-2 supply center flow path 141b flowing in a first direction, which is a direction of supplying the cooling oil, and a 2-2 discharge center flow path 142b flowing in a second direction, which is an opposite direction to the first direction and is a direction of discharging the cooling oil.

Further, the 2-1 supply center flow path 141a and the 2-1 discharge center flow path 142a are connected to the 2-1 full-width flow path 161 by the 2-1 branch flow path 180a, and the 2-2 supply center flow path 141b and the 2-2 discharge center flow path 142b are connected to the 2-2 full-width flow path 162 by the 2-2 branch flow path 180b. Specifically, the cooling oil flowing into the 2-1 supply center flow path 141a flows through the 2-1 discharge branch flow path 181a, the 2-1 full-width flow path 161, and the 2-1 discharge branch flow path 182a, and is discharged from the rolling roll through the 2-1 discharge center flow path 142a. The cooling oil flowing into the 2-2 supply center flow path 141b flows through the 2-2 supply branch flow path 181b, the 2-2 full-width flow path 162 and the 2-2 discharge branch flow path 182b to the 2-2 discharge center flow path 142b and is discharged from the rolling roll 100.

In this case, the 2-1 supply branch flow path 181a and the 2-1 discharge branch flow path 182a may be formed in such a form that the widths thereof become wider from the 2-1 supply center flow path 141a side toward the 2-1 full-width flow path 161 side, and the 2-2 supply branch flow path 181b and the 2-2 discharge branch flow path 182b may also be formed in such a form that the widths thereof become wider from the 2-2 supply center flow path 141b side toward the 2-2 full-width flow path 162 side.

Here, starting from the central part of the longitudinal direction of the roll body 100 and moving in a longitudinal direction (circumferential direction), the flow paths are located in the following order: 2-1 supply center flow path 141a, 2-1 discharge center flow path 142a, first supply center flow path 131, first discharge center flow path 132, 2-2 supply center flow path 141b, and 2-2 discharge center flow path 142b. Such positions are not limited, and any structure is possible as long as they are distinguishable from one another.

As described above, according to the present disclosure, the rolling roll has a structure in which the cooling water circulates inside the rolling roll 100 through two or more center flow path sections separated from each other and three flow paths separated in the longitudinal direction of the roll body 110. Here, the rolling roll has a circulation structure in which the first full-width flow path 150 circulates along the central part of the roll body 110, while the 2-1 full-width flow path 161 and the 2-2 full-width flow path 162 circulate along both side parts of the longitudinal direction of the roll body 110.

Therefore, the rolling roll 100 according to the present disclosure has flow paths separated along the longitudinal direction of the roll body 110, and therefore, when producing different models of electrodes on a rolling stand, it is possible to apply an optimal crown and thus improving the ease of side thickness control.

Specifically, the cooling oil flows simultaneously through the first full-width flow path 150, the 2-1 full-width flow path 161, and the 2-2 full-width flow path 162. Here, the cooling oil flowing through the first full-width flow path 150 and the cooling oil flowing through the 2-1 full-width flow path 161 and the 2-2 full-width flow path 162 are adjusted to have the same or different temperatures, so that the optimal crown can be modified and applied.

For example, if high-temperature cooling oil flows through the first full-width flow path 150 and low-temperature cooling oil flows through the 2-1 full-width flow path 161 and the 2-2 full-width flow path 162, the difference in temperature between the central part and both side parts in the longitudinal direction of the roll body 110 can be maximized, thereby achieving a maximum crown shape. When the temperatures of the cooling oil flowing through the first full-width flow path 150 and the cooling oil flowing through the 2-1 full-width flow path 161 and the 2-2 full-width flow path 162 are identical or similar, the difference in temperature between the central part and both side parts in the longitudinal direction of the roll body 110 can be minimized, thereby achieving a minimum crown shape.

Therefore, it is possible to apply an optimal crown shape for each electrode model.

Here, the cooling oil may have a temperature in the range of 25°C to 100°C, specifically 25°C to 90°C, and more specifically 30°C to 90°C. By adjusting the temperature of the cooling oil within this range, it is possible to adjust the crown shape.

Further, as described above, when the temperatures of the cooling oil flowing in the first full-width flow path 150 and the cooling oil flowing through the 2-1 full-width flow path 161 and the 2-2 full-width flow path 162 are made different, the respective temperatures of the cooling oils flowing through these paths may differ from each other within the above range. The specific temperature may be appropriately selected in accordance with the crown shape to be realized. However, the temperature difference required to provide a significant difference from the minimum crown may be 30°C to 70°C, and specifically 40°C to 60°C.

Meanwhile, the length l₁ of the first full-width flow path 150 may be selected to enable various applications of optimal crown, in consideration of the positional relationship with the 2-1 full-width flow path 161 and the 2-2 full-width flow path 162, and for example, the length may be 40 to 60%, specifically 40 to 55%, or more specifically 45 to 55% of the length of the roll body 110.

If the length is too short or too long outside the above range, it is difficult to achieve the maximum crown that can obtained by applying different temperatures, which is not preferable.

Meanwhile, the 2-1 full-width flow path 161 and the 2-2 full-width flow path 162 are not limited, but are preferably formed to have the same or similar lengths on both sides, and in order to achieve significant crown changes, the lengths l₂, l₃ may be respectively 10 to 25%, specifically 15 to 25%, or more specifically 20 to 25%, of the length of the roll body 110.

If the length is outside the above range and is shorter or longer than that, it may be difficult to achieve various crowns.

Meanwhile, each of the first full-width flow path 150, the 2-1 full-width flow path 161, and the 2-2 full-width flow path 162 may be formed into one straight flow path, or may be formed into two or more zigzag flow paths.

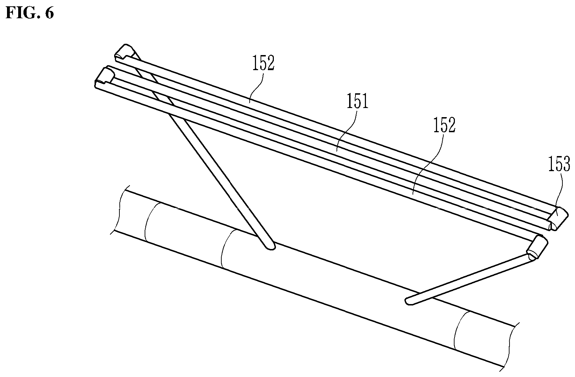

To explain this in detail, a perspective view for showing the shape of the first full-width flow path 150 and the first branch flow path 170 is illustrated in FIG. 6. The drawing is intended to illustrate the shape of the full-width flow path, and the length or the like does not affect the scope of the present disclosure. Referring to FIG. 6, the first full-width flow path 150 may be structured to include one 1-1 full-width flow path 151 flowing in a first direction which is a direction of supplying a cooling oil, two 1-2 full-width flow paths 152 flowing in a second direction which is an opposite direction to the first direction and is a direction of discharging the cooling oil, and first connection flow paths 153 that connect the 1-1 full-width flow path 151 and the 1-2 full-width flow path 152.

Therefore, referring to FIGS. 4 and 6 together, the cooling water supplied to flow in the first direction through the first supply center flow path 131 flows to the first supply branch flow path 171, flows in the second direction through the first connection flow path 153 and the first 1-2 full-width flow path 152, then flows in the first direction through the second first connection flow path 153 and the 1-1 full-width flow path 151, then flows again in the second direction through the third first connection flow path 153 and the second 1-2 full-width flow path 152, then passes through the fourth first connection flow path 153 and is transmitted to the first discharge center flow path 132 through the first discharge branch flow path 172.

Similarly, although not shown in the drawing, the 2-1 full-width flow path 161 and the 2-2 full-width flow path 162 may be formed in a zigzag pattern.

Specifically, the 2-1 full-width flow path 161 may comprise a 2-1-1 full-width flow path flowing in the first direction, a 2-1-2 full-width flow path flowing in a second direction which is an opposite direction to the first direction, and a 2-1 connection flow path that connects the 2-1-1 full-width flow path and the 2-1-2 full-width flow path, and the 2-2 full-width flow path 162 may comprise a 2-2-1 full-width flow path flowing in the first direction, a 2-2-2 full-width flow path flowing in the second direction which is an opposite direction to the first direction, and a 2-2 connection flow path that connects the 2-2-1 full-width flow path and the 2-2-2 full-width flow path.

However, the 2-1 full-width flow path 161 and the 2-2 full-width flow path 162 differ in the direction of supplying from the 2-1 supply center flow path 141a and the 2-2 supply center flow path 141b to the 2-1 supply branch flow path 181a and the 2-2 supply branch flow path 181b. Therefore, the cooling oil first flows to the 2-1-1 full-width flow path flowing in the first direction from the 2-1 supply branch flow path 181a, while it first flows to the 2-2-2 full-width flow path flowing in the second direction from the 2-2 supply branch flow path 181b.

When the first full-width flow path 150, the 2-1 full-width flow path 161, and the 2-2 full-width flow path 162 are formed in a zigzag pattern as described above, it is possible to further reduce temperature deviation in the circumferential direction and left-right direction of the rolling roll, which is more preferable.

Meanwhile, for convenience of explanation, in FIGS. 3 to 6, one first full-width flow path 150, 2-1 full-width flow path 161, and 2-2 full-width flow path 162 are shown as representative examples, however, the first full-width flow path 150, 2-1 full-width flow path 161, and 2-2 full-width flow path 162 may be respectively arranged in two or more, specifically four or more, more specifically five, at equal intervals at the same positions with respect to the circumferential direction of the roll body 110.

As a result, crown adjustment is possible all over the circumferential direction of the roll body 110.

As the intervals are narrower, the flow paths are more densely formed in a circumferential direction of the outer peripheral surface of the roll body 110, which is more effective for crown adjustment, however, in consideration of the flow path formation processability, it is preferable to form the flow paths within the above range.

When manufactured in this manner, the first full-width flow path 150, the 2-1 full-width flow path 161, and the 2-2 full-width flow path 162 are respectively formed in a zigzag pattern, so that the supply branch flow path and the discharge branch flow path are not formed at the same position on the cross section of the roll body 110, but are formed to have a constant angle.

The rolling roll 100 according to the present disclosure is used in conjunction with a rolling mill for rolling and forming battery electrodes for secondary batteries.

The roll body 110 has a rolling surface, which serves as the outer peripheral surface that contacts the electrode when rolling and forming the electrode, and although not shown in the drawing, the shaft section is supported by the rolling mill via ball bearing.

The rolling roll 100 according to the present disclosure may be a chrome rolling roll or a DLC (diamond-like carbon) rolling roll.

Although preferred embodiments of the present disclosure have been shown and described above with reference to the accompanying drawings, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

10: conventional rolling roll
100: rolling roll according to the present disclosure
110: roll body
120: shaft section
130: first center flow path
140: second center flow path
150: first full-width flow path
161: 2-1 full-width flow path
162: 2-2 full-width flow path
170: first branch flow path
180a: 2-1 branch flow path
180b: 2-2 branch flow path

### Industrial Applicability

According to the present disclosure, flow paths different from each other are applied to the rolling roll in the longitudinal direction of the rolling roll, which makes it possible to apply the optimal crown for each model on the same rolling stand, thereby exhibiting the effect of improving electrode side thickness process capability.

In addition, even when continuously producing the same model on the same rolling stand, the maximum back pressure margin can be secured, thereby improving thickness process capability and improving electrode quality..
The effects of the present disclosure are not limited to the effects mentioned above, and additional other effects not mentioned above will be clearly understood from the description of the appended claims by those skilled in the art.

## Claims

1. A rolling roll comprising:
a roll body;
a shaft section for supporting the roll body; and
a flow path section that is formed inside the roll body and the shaft section, and comprises:
a center flow path section that includes a first center flow path formed in a form penetrating through the center in a longitudinal direction of the roll body and the shaft section so that a cooling oil flows, a 2-1 center flow path formed separately from the first center flow path so that a cooling oil flows, and a 2-2 center flow path formed separately from the first center flow path and the 2-1 center flow path so that a cooling oil flows, and
a full-width flow path section that includes a first full-width flow path formed in the vicinity of an outer peripheral surface of the roll body so that the cooling oil flows in a central part with respect to a longitudinal direction of the roll body, a 2-1 full-width flow path formed in the vicinity of the outer peripheral surface of the roll body so that the cooling oil flows on one side of the first full-width flow path with respect to the longitudinal direction of the roll body, and a 2-2 full-width flow path formed so that the cooling oil flows on the other side of the first full-width flow path.

2. The rolling roll according to claim 1,
wherein the first center flow path and the first full-width flow path are formed in parallel, and the 2-1 center flow path and the 2-1 full-width flow path are formed in parallel, and the 2-2 center flow path and the 2-2 full-width flow path are formed in parallel.

3. The rolling roll according to claim 1,
further comprising a first branch flow path formed to connect the first center flow path and the first full-width flow path, a 2-1 branch flow path formed to connect the 2-1 center flow path and the 2-1 full-width flow path, and a 2-2 branch flow path formed to connect the 2-2 center flow path and the 2-2 full-width flow path.

4. The rolling roll according to claim 3,
wherein the first center flow path comprises a first supply center flow path flowing in a first direction which is a direction of supplying the cooling oil, and a first discharge center flow path flowing in a second direction which is an opposite direction to the first direction and is a direction of discharging the cooling oil, and
the first branch flow path comprises a first supply branch flow path formed so that the cooling oil flows from the first supply center flow path to the first full-width flow path, and a first discharge branch flow path formed so that the cooling oil flows from the first full-width flow path to the first discharge center flow path.

5. The rolling roll according to claim 3,
wherein the 2-1 center flow path comprises a 2-1 supply center flow path flowing in a first direction which is a direction of supplying the cooling oil, and a 2-1 discharge center flow path flowing in a second direction which is an opposite direction to the first direction and is a direction of discharging the cooling oil, with the 2-1 branch flow path comprising a 2-1 supply branch flow path formed so that the cooling oil flows from the 2-1 supply center flow path to the 2-1 full-width flow path, and a 2-1 discharge branch flow path formed so that the cooling oil flows from the 2-1 full-width flow path to the 2-1 discharge center flow path,
the 2-2 center flow path comprises a 2-2 supply center flow path flowing in a first direction which is a direction of supplying the cooling oil, and a 2-2 discharge center flow path flowing in a second direction which is an opposite direction to the first direction and is a direction of discharging the cooling oil, and
the 2-2 branch flow path comprises a 2-2 supply branch flow path formed so that the cooling oil flows from the 2-2 supply center flow path to the 2-2 full-width flow path, and a 2-2 discharge branch flow path formed so that the cooling oil flows from the 2-2 full-width flow path to the 2-2 discharge center flow path.

6. The rolling roll according to claim 1,
wherein the first full-width flow path comprises a 1-1 full-width flow path flowing in a first direction, a 1-2 full-width flow path flowing in a second direction which is an opposite direction to the first direction, and a first connection flow path that connects the 1-1 full-width flow path and the 1-2 full-width flow path, and
the 2-1 full-width flow path comprises a 2-1-1 full-width flow path flowing in the first direction, a 2-1-2 full-width flow path flowing in a second direction which is an opposite direction to the first direction, and a 2-1 connection flow path that connects the 2-1-1 full-width flow path and the 2-1-2 full-width flow path, and
the 2-2 full-width flow path comprises a 2-2-1 full-width flow path flowing in the first direction, a 2-2-2 full-width flow path flowing in the second direction which is an opposite direction to the first direction, and a 2-2 connection flow path that connects the 2-2-1 full-width flow path and the 2-2-2 full-width flow path.

7. The rolling roll according to claim 1,
wherein the first full-width flow path has a length of 40 to 60% of the roll body length.

8. The rolling roll according to claim 1,
wherein the 2-1 full-width flow path and the 2-2 full-width flow path have a length of 15 to 25% of the roll body length, respectively.

9. The rolling roll according to claim 1,
wherein the first full-width flow path, the 2-1 full-width flow path, and the 2-2 full-width flow path are arranged at the same position with respect to a circumferential direction of the roll body.

10. The rolling roll according to claim 6,
wherein the first full-width flow path, the 2-1 full-width flow path, and the 2-2 full-width flow path are respectively arranged in two or more at equal intervals.

11. The rolling roll according to claim 1,
wherein the cooling oil flows simultaneously through the first full-width flow path, the 2-1 full-width flow path, and the 2-2 full-width flow path, and the cooling oil flowing through the first full-width flow path and the cooling oil flowing through the 2-1 full-width flow path and the 2-2 full-width flow path are adjusted to have the same or different temperatures.

12. The rolling roll according to claim 1,
wherein the cooling oil has a temperature in the range of 25°C to 100°C.

13. The rolling roll according to claim 12,
wherein when the temperatures of the cooling oil flowing through the first full-width flow path and the cooling oil flowing through the 2-1 full-width flow path and the 2-2 full-width flow path are different from each other, the temperature difference is 30°C to 70°C.
